# EUROPEAN PATENT SPECIFICATION

(11) **EP 3 086 053 B1**
(45) Date of publication and mention of the grant of the patent: **06.06.2018**
(21) Application number: 13899755.6
(22) Date of filing: 16.12.2013
(51) Int. Cl.: F24H 1/00, F24H 9/20, F24H 4/02

(54) **HEAT PUMP HOT WATER SUPPLY DEVICE**
WÄRMEPUMPENARTIGE WARMWASSERVERSORGUNGSVORRICHTUNG
DISPOSITIF D'APPORT D'EAU CHAUDE DE POMPE À CHALEUR

(43) Date of publication of application: 26.10.2016
(73) Proprietor: Mitsubishi Electric Corporation, Tokyo 100-8310 (JP)
(72) Inventor: YAMANO, Yoshio, Tokyo 100-8310 (JP); ABE, Ryosuke, Tokyo 100-8310 (JP); OISHI, Satoko, Tokyo 100-8310 (JP)
(74) Representative: Moore, Graeme Patrick
(86) International application number: PCT/JP2013/083570
(87) International publication number: WO 2015/092845

(56) References cited:
- DE-B3-102005 044 029
- JP-A- 2004 156 849
- JP-A- 2004 156 849
- JP-A- 2004 317 021
- JP-A- 2007 040 567
- JP-A- 2007 093 100
- JP-A- 2009 186 121
- JP-A- 2011 117 721
- JP-A- 2012 032 091
- US-B1- 6 321 549

## Description

### Technical Field

The present invention relates to a heat-pump water heating apparatus.

### Background Art

In order to increase the maximum heating capacity of a heat-pump water heating apparatus, the heat-pump water heating apparatus is realized by a plurality of refrigerant circuits coupled to each other by a water circuit of heat exchangers. However, in the heat-pump water heating apparatus intended and configured to increase the maximum heating capacity as described above, when a hot water supply load is small, frequent starting and stopping of the compressor will be needed. Thus, condensing temperature is unstable, water supply temperature is unstable, and power is wastefully consumed, resulting in low efficiency.

In order not to frequently start or stop the compressor and stabilize the water supply temperature without power consumption loss when the hot water supply load is small, it is effective to arrange a plurality of compressors in one refrigerant circuit. As a conventional art in which the plurality of compressors are arranged in one refrigerant circuit as described above, a heat-pump water heating apparatus disclosed in Patent Literature 1 is known. In this heat-pump water heating apparatus, a plurality of compressors that have the same capacity and are driven by inverters are arranged in parallel to each other.

JP2004156849A discloses a heat pump hot-water supply device according to the preamble of claim 1 having a wide capacity width and capable of efficiently supplying hot water with favorable controllability.

### Citation List

### Patent Literature

Patent Literature 1: Japanese Patent No. 4016875 (see, for example, Page 8 and Fig. 1)

### Summary of Invention

### Technical Problem

In the known heat-pump water heating apparatus disclosed in Patent Literature 1, the plurality of compressors that have the same capacity and are driven by the inverters are arranged in parallel to each other, and, for a small hot water supply load, only one compressor out of the plurality of compressors is operated. However, in the case of handling the small hot water supply load, there is a limit to the amount of reducing the operating frequency of the compressor to reduce the heating capacity. For this reason, in order to handle the small hot water supply load, one compressor is operated alone ("in a single operation"), and starting/stopping of the compressor repeatedly takes place with its compressor operating frequency being reduced to the minimum value. However, this method has a problem in that the compressor is frequently started and stopped, to thereby reduce operation efficiency, disadvantageously.

Moreover, in the heat-pump water heating apparatus of Patent Literature 1, the compressors have the same capacity, and hence when the hot water supply load is small and the single operation is to be performed, there is no choice but to use the one capacity (type) of the compressors. Thus, there is a problem in that a method of selecting a compressor from compressors having different capacities in accordance with the hot water supply load cannot be employed, and it is therefore difficult to handle various hot water supply loads.

The present invention has been made in order to overcome the problems described above, and has an object to provide a heat-pump water heating apparatus that may lower the frequency of starting/stopping of a compressor even when the hot water supply load is small, and thus suppress a reduction in operation efficiency due to the start/stop, while being capable of handling various hot water supply loads.

### Solution to Problem

According to one embodiment of the present invention, there is provided a heat-pump water heating apparatus as set forth in claim 1.

### Advantageous Effects of Invention

According to the one embodiment of the present invention, it is possible to obtain the heat-pump water heating apparatus that may lower the frequency of starting/stopping of the compressor even when the hot water supply load is small, and thus suppress the reduction in operation efficiency due to the start/stop, while being capable of handling various hot water supply loads.

### Brief Description of Drawings

Fig. 1 is a diagram of configuration of a heat-pump water heating apparatus according to Embodiment 1 of the present invention.
Fig. 2 is a graph showing a relationship between a hot water supply load and an operating frequency of each of a large-capacity compressor and a small-capacity compressor of the heat-pump water heating apparatus according to Embodiment 1 of the present invention.
Fig. 3 is a flow chart of compressor operating frequency control of the heat-pump water heating apparatus according to Embodiment 1 of the present invention.
Fig. 4 is a characteristic diagram for showing a relationship between a refrigerant circulating amount and compressor efficiency of the heat-pump water heating apparatus according to Embodiment 1 of the present invention.
Fig. 5 is a characteristic diagram for showing a relationship between air temperature and an operating frequency change rate of a heat-pump water heating apparatus according to Embodiment 2 of the present invention.
Fig. 6 is a flow chart of compressor operating frequency control of the heat-pump water heating apparatus according to Embodiment 2 of the present invention.
Fig. 7 is a flow chart of control for an opening degree of a pressure reducing device of the heat-pump water heating apparatus according to Embodiment 2 of the present invention.
Fig. 8 is a graph showing a change in high pressure (condensing pressure) observed when target water supply temperature is changed in the heat-pump water heating apparatus according to Embodiment 2 of the present invention.

### Description of Embodiments

### Embodiment 1

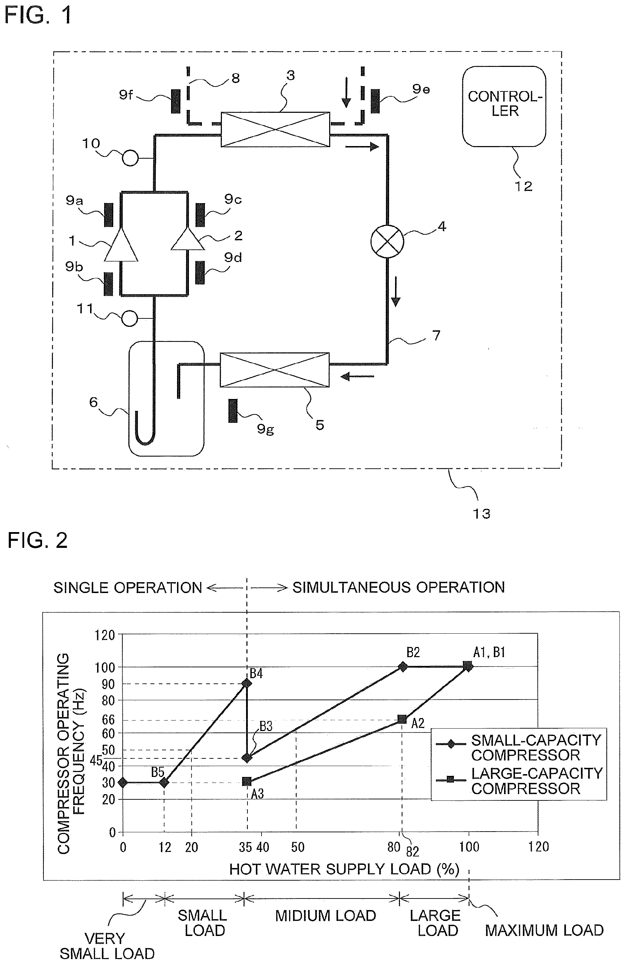

Fig. 1 is a diagram of configuration of a heat-pump water heating apparatus according to Embodiment 1 of the present invention.

A heat-pump water heating apparatus 13 includes a refrigerant circuit in which, by a refrigerant pipe 7, a plurality of inverter compressors 1 and 2 having capacities different from each other (hereinafter referred to as "large-capacity compressor 1" and "small-capacity compressor 2"), a load-side heat exchanger 3, a pressure reducing device 4 formed, for example, of an electronic expansion valve, a heat source-side heat exchanger 5, and an accumulator 6 are connected. The large-capacity compressor 1 and the small-capacity compressor 2 are arranged in parallel to each other. Note that, both of the compressors 1 and 2 are referred to simply as "compressor" without any reference symbol when the compressors 1 and 2 are not particularly discriminated but treated collectively.

Each of the large-capacity compressor 1 and the small-capacity compressor 2 is configured to compress refrigerant to high-temperature and high-pressure refrigerant. The load-side heat exchanger 3 is configured to exchange heat between the high-temperature and high-pressure refrigerant discharged from the large-capacity compressor 1 and the small-capacity compressor 2, and water serving as a load-side heat medium in a hot water supply circuit described later, to thereby heat the water. The pressure reducing device 4 is configured to cause pressure loss in high-pressure liquid refrigerant that has been condensed in the heat source-side heat exchanger 5 through heating of water, to thereby produce low-temperature and low-pressure liquid refrigerant.

The heat source-side heat exchanger 5 is configured to transfer heat of air (outside air) serving as a heat medium to the low-temperature and low-pressure liquid refrigerant. The accumulator 6 is configured to separate gas refrigerant and a liquid refrigerant from each other and convey the gas refrigerant and a refrigerating machine oil to each of the large-capacity compressor 1 and the small-capacity compressor 2.

Moreover, the heat-pump water heating apparatus 13 includes a water pipe 8 for allowing water to pass through the load-side heat exchanger 3. Further, the water pipe 8 and the load-side heat exchanger 3 are connected to each other to form the hot water supply circuit.

The heat-pump water heating apparatus 13 further includes various sensors described below. Specifically, the heat-pump water heating apparatus 13 includes a discharge temperature sensor 9a configured to detect a discharge temperature of the large-capacity compressor 1, a suction temperature sensor 9b configured to detect a suction temperature of the large-capacity compressor 1, a discharge temperature sensor 9c configured to detect a discharge temperature of the small-capacity compressor 2, and a suction temperature sensor 9d configured to detect a suction temperature of the small-capacity compressor 2. Moreover, the heat-pump water heating apparatus 13 includes an inlet water temperature detection sensor 9e configured to detect an inlet water temperature of the load-side heat exchanger 3, an outlet water temperature detection sensor 9f configured to detect an outlet water temperature (water supply temperature) of the load-side heat exchanger 3, and a heat medium temperature detection sensor 9g configured to detect a temperature of outside air passing through the heat source-side heat exchanger 5.

Moreover, the heat-pump water heating apparatus 13 includes a discharge pressure sensor 10 configured to detect discharge refrigerant pressures of the large-capacity compressor 1 and the small-capacity compressor 2, and a suction pressure sensor 11 configured to detect suction refrigerant pressures of the large-capacity compressor 1 and the small-capacity compressor 2.

Moreover, the heat-pump water heating apparatus 13 further includes a controller 12 configured to control the whole of the heat-pump water heating apparatus 13. The controller 12 is formed of a microcomputer and includes a CPU, a RAM, a ROM, and other such components. A control program and the like are stored in the ROM. The controller 12 computes the hot water supply load of the hot water supply circuit as described later, and determines the operating frequency of each of the large-capacity compressor 1 and the small-capacity compressor 2 in accordance with the calculated hot water supply load so that condensing temperature may have a predetermined value (for example, 61 degrees C). Then, the controller 12 controls the large-capacity compressor 1 and the small-capacity compressor 2 so as to be operated at the determined operating frequencies.

Moreover, the controller 12 controls an opening degree of the pressure reducing device 4 so that a degree of superheat at a refrigerant outlet of the heat source-side heat exchanger 5 may be a preset degree of superheat (for example, 4 degrees C), which is set in advance. This degree of superheat is obtained by subtracting, from a suction refrigerant temperature detected by the suction temperature sensor 9b, saturation temperature obtained through conversion of a suction pressure detected by the suction pressure sensor 11. In this way, the suction temperature sensor 9b and the suction pressure sensor 11 form a degree-of-superheat detection unit. Note that, the degree-of-superheat detection unit only needs to detect a degree of superheat, and there may be used a temperature sensor configured to detect a refrigerant temperature at an inlet of the heat source-side heat exchanger 5 instead of the suction pressure sensor 11.

A method of computing a hot water supply load of the hot water supply circuit is described. The controller 12 computes a current capacity of the heat pump water heating apparatus based on an inlet water temperature detected by the inlet water temperature detection sensor 9e and an outlet water temperature detected by the outlet water temperature detection sensor 9f, detects a change in inlet water temperature that is observed when the compressors are operated with the current capacity for a certain period of time, and estimates a load with the formula below. When the load is larger than the current capacity, the inlet water temperature is reduced (-), whereas when the load is smaller than the current capacity, the inlet water temperature is increased (+). The hot water supply load can be calculated by inputting a quantity of retained water, specific heat, and a unit maximum capacity in advance.

Hot water supply load [%]=(current capacity-change in inlet water temperature pert unit time × quantity of retained water × specific heat)/unit maximum capacity

Note that, the method of computing a hot water supply load is not limited to the above-mentioned method, and other methods may be used.

The heat-pump water heating apparatus of the present invention has a feature of, while being capable of handling various hot water supply loads, lowering the frequency of starting/stopping of the compressor even when the hot water supply load is small. In order to enable the heat-pump water heating apparatus to handle the various hot water supply loads, the large-capacity compressor 1 and the small-capacity compressor 2 that have capacities different from each other are arranged in parallel to each other, and a relationship shown in Fig. 2 that is referred to below is established between the hot water supply load and the operating frequency of each of the large-capacity compressor 1 and the small-capacity compressor 2. Note that, in this case, the operating frequency ranges of the large-capacity compressor 1 and the operating frequency range of the small-capacity compressor 2 are both set to a range of from 30 Hz to 100 Hz.

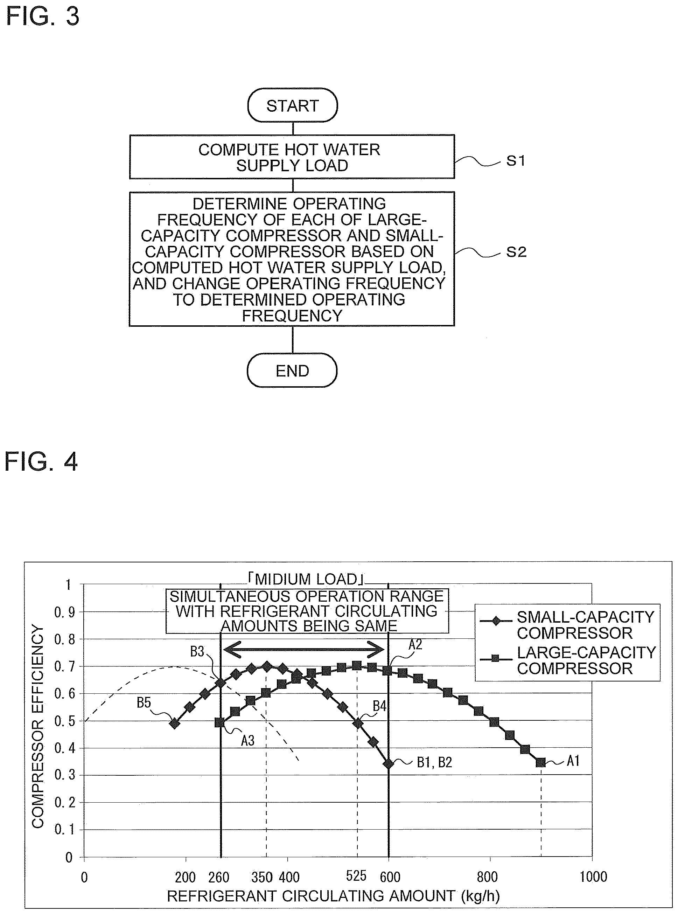

Fig. 2 is a graph showing a relationship between the hot water supply load of the heat-pump water heating apparatus according to Embodiment 1 of the present invention and the operating frequency of each of the large-capacity compressor 1 and the small-capacity compressor 2. In Fig. 2, the operating frequency of the large-capacity compressor 1 is changed at a point A1 to a point A3, and the operating frequency of the small-capacity compressor 2 is changed at a point B1 to a point B5. Each of those points is described below with reference to Fig. 4 that is referred to later.

The relationship of Fig. 2 is stored in the controller 12 in advance in the form of an arithmetic expression or a conversion table, and is used when the controller 12 determines the operating frequency of each of the large-capacity compressor 1 and the small-capacity compressor 2 in accordance with the hot water supply load. In Fig. 2, numerical values (%) and operating frequencies for classifying types of the hot water supply load are merely examples, and those values may be appropriately set based on actual use conditions and other factors.

First, what is shown in Fig. 2 is roughly described. When the hot water supply load calculated in the above-mentioned manner is equal to or more than a first preset load (in this case, for example, 35%), which is set in advance, the controller 12 causes both of the large-capacity compressor 1 and the small-capacity compressor 2 to operate (hereinafter this may be referred to as "simultaneous operation"). On the other hand, when the hot water supply load is less than the first preset load, the controller 12 causes the small-capacity compressor 2 (corresponding to a compressor having the minimum capacity among the plurality of compressors) alone to operate (this may be referred to as "single operation").

### (Simultaneous Operation)

Different simultaneous operations are performed between when the hot water supply load is a "large load" (second preset load (in this case, for example, 82%) or more and 100% or less), and when the hot water supply load is a "middle load" (third set load (in this case, for example, 35%) or more and less than second preset load).

Moreover, when the hot water supply load is from 82% or more to less than 100% in the "large load" region of the hot water supply load, the controller 12 sets the operating frequency of the small-capacity compressor 2 to the maximum operating frequency for use. On the other hand, the large-capacity compressor 1 has a relationship that the smaller the hot water supply load, the lower the operating frequency of the small-capacity compressor 2. The controller 12 determines the operating frequency of the small-capacity compressor 2 based on this relationship in accordance with the hot water supply load.

Note that, a lower limit value of the operating frequency of the large-capacity compressor 1 when the hot water supply load is the "large load" is set to an operating frequency of 66 Hz at which the same refrigerant circulating amount as a refrigerant circulating amount obtained when the small-capacity compressor 2 has the maximum operating frequency of 100 Hz is obtained.

When the hot water supply load is in the "middle load" region, a relationship is established that the operating frequencies of the large-capacity compressor 1 and the small-capacity compressor 2 are both set to lower values as the hot water supply load becomes smaller. The controller 12 determines the operating frequency of each of the large-capacity compressor 1 and the small-capacity compressor 2 based on this relationship. Moreover, the operating frequency of each of the large-capacity compressor 1 and the small-capacity compressor 2 in this case are set so that refrigerant circulating amounts of the large-capacity compressor 1 and the small-capacity compressor 2 may be equal to each other. The "middle load" is considered to be the most often-generated load region during the operation of the heat-pump water heating apparatus 13. When the hot water supply load is the "middle load", the operating frequency of each of the large-capacity compressor 1 and the small-capacity compressor 2 is controlled so that the refrigerant circulating amounts may be equal to each other, with the result that the same amount of refrigerating machine oils can be circulated through the large-capacity compressor 1 and the small-capacity compressor 2. With this, failure of the large-capacity compressor 1 and the small-capacity compressor 2 that may occur due to running out of the oil can be prevented.

### (Single Operation)

Different single operations are performed between when the hot water supply load is a "small load" (hot water supply load of from 12% or more to less than 35%), and when the hot water supply load is a "very small load" (hot water supply load of from 0% or more to less than 12%).

When the hot water supply load is in the "small load" region, a relationship is established that the smaller the hot water supply load, the lower the operating frequency of the small-capacity compressor 2 . The controller 12 determines the operating frequency of the small-capacity compressor 2 based on this relationship in accordance with the hot water supply load.

When the hot water supply load is in the "very small load" region, the controller 12 fixes the operating frequency of the small-capacity compressor 2 to the minimum operating frequency for use, and starts and stops the small-capacity compressor 2 in accordance with the hot water supply load.

Moreover, when the hot water supply load decreases and falls below a hot water supply load of 35% that is a boundary between the simultaneous operation and the single operation, the following operation is performed. Specifically, when the hot water supply load decreases and falls below the hot water supply load of 35%, the operation of the large-capacity compressor 1 is stopped and the operation is switched to the single operation that is performed by the small-capacity compressor 2. At this time, the operating frequency of the small-capacity compressor 2 is increased so that, after the operation is switched to the single operation, the one small-capacity compressor 2 can cover a refrigerant circulating amount of the large-capacity compressor 1 immediately before the operation of the large-capacity compressor 1 is stopped.

Note that, the hot water supply load of 35% that is the boundary between the simultaneous operation and the single operation is in the "middle load" region, and hence the refrigerant circulating amounts of the large-capacity compressor 1 and the small-capacity compressor 2 are equal to each other as described above. Thus, when the operation is switched from the simultaneous operation to the single operation, the operating frequency of the small-capacity compressor 2 is increased so that the small-capacity compressor 2 may have a refrigerant circulating amount twice as large as an own refrigerant circulating amount in the simultaneous operation immediately before the operation is switched to the single operation.

Fig. 3 is a flow chart of compressor operating frequency control of the heat-pump water heating apparatus according to Embodiment 1 of the present invention. The control of Fig. 3 is carried out for each control interval set in advance.

The controller 12 computes the hot water supply load based on a current capacity computed based on an inlet water temperature detected by the inlet water temperature detection sensor 9e and an outlet water temperature detected by the outlet water temperature detection sensor 9f, and a change in inlet water temperature that is observed when the compressors are operated with the current capacity for a certain period of time (S1). Then, the controller 12 determines the operating frequency of each of the large-capacity compressor 1 and the small-capacity compressor 2 based on the relationship of Fig. 2 in accordance with the calculated hot water supply load, and changes the operating frequencies to the determined operating frequencies (S2).

In the following, the operation of the heat-pump water heating apparatus 13 is described with a specific example. Note that, the example is described with the values of Fig. 2.

For example, the following case is considered. Filling of a bathtub with hot water and dishwashing are both performed, and the hot water supply load is 50%. Then, the bathtub is filled with the hot water and now only the dishwashing is being performed, and the hot water supply load decreases to 20%. In this case, first, the simultaneous operation is performed when the hot water supply load is 50%, that is, as can be seen from Fig. 2, the large-capacity compressor 1 is operated at 40 Hz and the small-capacity compressor 2 is operated at 60 Hz. Then, when the hot water supply load decreases to 20%, the operation is switched to the single operation that is performed by the small-capacity compressor 2, and the operation of the large-capacity compressor 1 is thus stopped. In this case, the operation of the large-capacity compressor 1 is stopped as follows. The operating frequency of the large-capacity compressor 1 is not changed from 40 Hz to 0 Hz, but is reduced by a predetermined frequency (for example, 10 Hz) for each control interval (for example, every 30 seconds), which is set in advance, until the operating frequency reaches 30 Hz that is the minimum operating frequency for use of the large-capacity compressor 1, and then the operating frequency is set to 0 Hz to stop the large-capacity compressor 1.

Meanwhile, the small-capacity compressor 2 is first operated at 60 Hz when the hot water supply load is 50%. Then, when the hot water supply load decreases to 20%, the operating frequency is reduced down to 45 Hz. In order to reduce the operating frequency to 45 Hz, similarly to the case described above, the operating frequency is reduced from 60 Hz by a predetermined frequency (for example, 10 Hz) for each control interval (for example, 30 every seconds). Then, when the operating frequency reaches 50 Hz, the operating frequency is once increased to 90 Hz. After that, the operating frequency is reduced again by the predetermined frequency for each control interval until reaching 45 Hz.

Note that, the case in which the hot water supply load decreases is herein described as an example. However, when the hot water supply load increases, the operating frequency of each of the large-capacity compressor 1 and the small-capacity compressor 2 is increased based on Fig. 2 through a process reverse to the above-mention operation.

As described above, in Embodiment 1 in which the large-capacity compressor 1 and the small-capacity compressor 2 having different capacities are arranged in parallel to each other, the "small load" is handled with the single operation that is performed by the small-capacity compressor 2, and the small-capacity compressor 2 is stared and stopped only for the "very small load" that is smaller than the "small load". Thus, the frequency of the start/stop operation can be reduced as compared to the known heat-pump water heating apparatus. Specifically, the known heat-pump water heating apparatus includes the two compressors having the same capacity, and hence if the two compressors are assumed as, for example, two middle-capacity compressors, the single operation is performed by the one middle-capacity compressor when the hot water supply load is small. On the other hand, in Embodiment 1, a small load is handled with the single operation that is performed by the small-capacity compressor 2, and hence the frequency of starting/stopping of the compressor can be reduced as compared to the single operation that is performed by the middle-capacity compressor.

Moreover, if the known heat-pump water heating apparatus is assumed to include two small-capacity compressors 2, the frequency of starting/stopping of the compressor when the hot water supply load is small is the same as that in Embodiment 1. However, both the two compressors are the small-capacity compressors having the small capacity, and hence the capacity is insufficient for a large hot water supply load, resulting in difficulty in handling various hot water supply loads.

From the forgoing, in Embodiment 1, the plurality of compressors having different capacities are connected in parallel to each other, thereby being capable of forming the heat-pump water heating apparatus 13 that can lower the frequency of starting/stopping of the compressor even when the hot water supply load is small, and thus suppress a reduction in efficiency due to the start/stop, while being capable of handling various hot water supply loads.

At the design stage, a plurality of compressors to be used in the heat-pump water heating apparatus 13 are selected as follows from a plurality of kinds of compressors having various capacities. First, a selection criterion is whether or not a hot water supply load of 100% can be handled when each compressor is operated at the maximum operating frequency for use thereof based on the horsepower of the heat-pump water heating apparatus 13. Then, from among various compressors satisfying the selection criterion, compressors are selected that can be used in an operating frequency range in which compressor efficiency thereof is excellent in the "middle load" region that is the often-used hot water supply load region. In other words, the operating frequency of compressors at which compressor efficiency thereof is the maximum is generally predetermined in accordance with the specifications of the compressors, and hence the compressors are selected by using this relationship.

Fig. 4 is a characteristic diagram showing a relationship between a refrigerant circulating amount and compressor efficiency of the heat-pump water heating apparatus according to Embodiment 1 of the present invention. In Fig. 4, the characteristics of each of the large-capacity compressor 1 and the small-capacity compressor 2 are shown. Note that, A1 to A3 of Fig. 4 indicate a relationship between refrigerant circulating amounts of the large-capacity compressor 1 at the respective operating frequencies of A1 to A3 of Fig. 2, and the compressor efficiency. Similarity, B1 to B5 of Fig. 4 indicate a relationship between refrigerant circulating amounts of the small-capacity compressor 2 at the respective operating frequencies of B1 to B5 of Fig. 2, and the compressor efficiency.

As is apparent from Fig. 4, in the characteristics of each of the large-capacity compressor 1 and the small-capacity compressor 2, a point at which the compressor efficiency is the maximum is positioned in the "middle load" region that is the often-used hot water supply load region.

Moreover, it is preferred that a capacity ratio between the large-capacity compressor 1 and the small-capacity compressor 2 be 3:2, and the reason for this is described with reference to Fig. 4.

A refrigerant circulating amount required for obtaining a capacity with which a load of the "middle load" can be handled is roughly determined based on the horsepower of the heat-pump water heating apparatus 13, and each of the compressors 1 and 2 is herein required to have the refrigerant circulating amount of from 260 kg/h to 600 kg/h. Further, in a range in which the refrigerant circulating amount of each of the compressors 1 and 2 is from 260 kg/h to 600 kg/h, when a point at which the compressor efficiency of the compressor 1 is the maximum and a point at which the compressor efficiency of the compressor 2 is the maximum are respectively positioned inside the upper limit and the lower limit of the range in which simultaneous operation are performed (simultaneous operation range) by about one fourth of the simultaneous operation range, the parts of operating frequencies to yield excellent compressor efficiency can be used for a wide range within the simultaneous operation range. Thus, as shown in Fig. 4, it is preferred that the capacity ratio between the large-capacity compressor 1 and the small-capacity compressor 2 be 3:2.

In this case, if the capacity ratio between the large-capacity compressor 1 and the small-capacity compressor 2 is changed to 3:1 while the capacity of the large-capacity compressor 1 is fixed, the characteristics of the small-capacity compressor 2 are moved to positions indicated by the dotted line of Fig. 4. In this case, in the hot water supply load region corresponding to the "middle load", the small-capacity compressor 2 is used in a range in which the compressor efficiency is decreases to the right of the diagram, and hence the efficiency in the often-used hot water supply load region is reduced as compared to the case in which the capacity ratio is set to 3:2. Due to the reasons described above, it is preferred that the capacity ratio between the large-capacity compressor 1 and the small-capacity compressor 2 be 3:2.

Further, when the capacity ratio between the large-capacity compressor 1 and the small-capacity compressor 2 is set to 3:2, the operating frequency range of each of the large-capacity compressor 1 and the small-capacity compressor 2 is from 30 Hz to 100 Hz, and hence the "simultaneous operation range with refrigerant circulating amount being same" of the large-capacity compressor 1 is from 30 Hz to 66 Hz and the "simultaneous operation range with refrigerant circulating amount being same" of the small-capacity compressor 2 is from 45 Hz to 100 Hz. Calculating frequencies at the points below the upper limit by about one fourth in the respective operating frequency ranges yields the frequency of the large-capacity compressor 1, 66-(66-30)/4=57, and for the frequency of the small-capacity compressor 2, 45+(100-45)/4=58.75. Accordingly, compressors whose compressor efficiency is the maximum at the operating frequency of 60 Hz are selected. Thus, the parts of operating frequencies to yield excellent compressor efficiency can be used for a wide range within the simultaneous operation range.

As described above, according to Embodiment 1, the plurality of compressors having different capacities are connected in parallel to each other in the refrigerant circuit, and hence the following effects can be obtained. That is, it is possible to reduce the frequency of starting/stopping of the compressor even when the hot water supply load is small, and thus suppress a reduction in operation efficiency due to the start/stop, while various hot water supply loads can be handled.

Moreover, the operating frequencies are controlled so that the refrigerant circulating amounts of the compressors 1 and 2 are the same in the hot water supply load region corresponding to the "middle load", which is most often generated during the operation, and hence the same amount of refrigerating machine oils can be circulated through the compressors 1 and 2, with the result that failure of the compressors that may occur due to running out of the oil can be prevented.

Moreover, when the refrigerant circuit includes the two compressors, the large-capacity compressor 1 and the small-capacity compressor 2, the capacity ratio between the large-capacity compressor 1 and the small-capacity compressor 2 is set to 3:2, and hence the following effects can be obtained. That is, in the hot water supply load region that is most often generated during the operation, both of the large-capacity compressor 1 and the small-capacity compressor 2 can be used with good balance of the compressor efficiency in a range including the points at which the compressor efficiency of the compressors 1 and 2 is the maximum. With this, average compressor efficiency in the hot water supply load region that is most often generated during the operation can be approximately constant at high efficiency.

Note that, the two compressors are herein used, but, of course, three or more compressors may be used. In this case, when the hot water supply load is equal to or more than the first preset load set in advance, a plurality of compressors are operated in the simultaneous operation, and the operating frequency of each compressor is controlled in accordance with the hot water supply load. Moreover, when the hot water supply load is less than the first preset load, a compressor having the minimum capacity of the plurality of compressors is operated in the single operation, and the operating frequency thereof may be controlled in accordance with the hot water supply load.

### Embodiment 2

The heat-pump water heating apparatus 13 has a protection function for preventing the condensing pressure from being equal to or more than pressure resistances of devices forming the refrigerant circuit. When the condensing pressure exceeds a design pressure set to a value smaller than the pressure resistances, the protection function is activated to stop the operation of the compressor. The operation efficiency is reduced when the compressor is frequently started and stopped by the protection function described above. Thus, in Embodiment 2 of the present invention, frequent activation of the protection function is suppressed.

In the following, what distinguishes Embodiment 2 from Embodiment 1 is mainly described. The configuration of the heat-pump water heating apparatus 13 of Embodiment 2 is the same as that of Embodiment 1 illustrated in Fig. 1.

The controller 12 of the heat-pump water heating apparatus 13 of Embodiment 2 has a reference change rate that is used when the operating frequency is changed. Specifically, the operating frequency is changed by a predetermined frequency (for example, 10 Hz), which is set in advance, for each control interval (for example, 30 seconds). Further, the controller 12 automatically changes, in order to prevent the protection function from being frequently activated, a change rate of the operating frequency based on outside air temperature measured by the heat medium temperature detection sensor 9g.

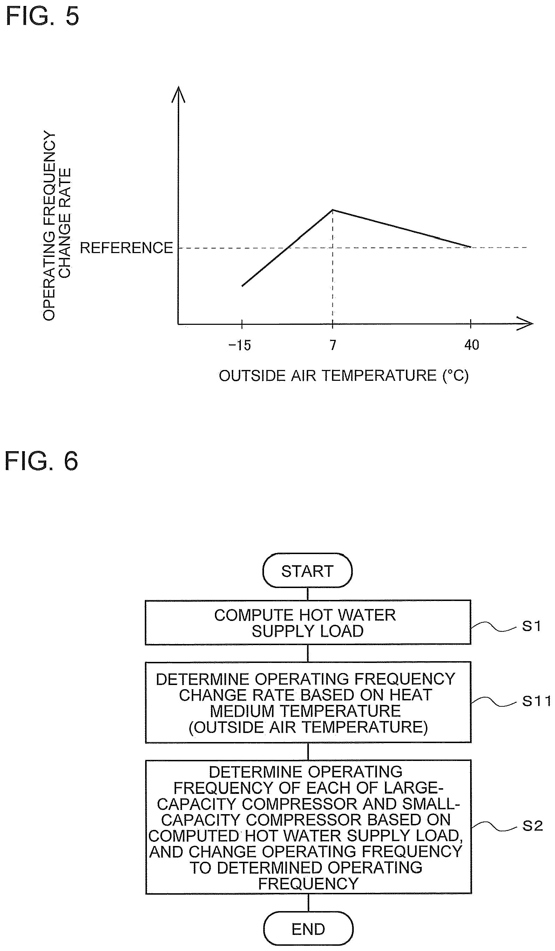

Fig. 5 is a characteristic diagram for showing a relationship between air temperature and an operating frequency change rate of the heat-pump water heating apparatus according to Embodiment 2 of the present invention.

The operating frequency change rate is set as follows when the condensing pressure is 3.5 MPa or more. When outside air temperature measured by the heat medium temperature detection sensor 9g is -15 degrees C, the operating frequency change rate is set to one half of the reference. Moreover, when the outside air temperature is 7 degrees C, the operating frequency change rate is set to 1.5 times as large as the reference. Moreover, when the outside air temperature is 40 degrees C, the operating frequency change rate is set to the reference itself. Further, when the outside air temperature falls within a range of from -15 degrees C or more to less than 7 degrees C, a relationship is established that the operating frequency change rate increases, and when the outside air temperature falls within a range of from 7 degrees C or more to less than 40 degrees C, a relationship is established that the operating frequency change rate decreases.

The relationship of Fig. 5 is obtained in advance from experiment or simulation for the purpose of changing, at suitable speed, a current operating frequency to an operating frequency in accordance with a hot water supply load that has been changed, to thereby avoid the activation of the protection function, which may occur due to an increase in high pressure. Further, the relationship of Fig. 5 is stored in the controller 12 in advance in the form of an arithmetic expression or a conversion table. After the operating frequency of each of the large-capacity compressor 1 and the small-capacity compressor 2 is determined in accordance with the hot water supply load, the operating frequency change rate of Fig. 5 is used to change the current operating frequencies to the determined operating frequencies.

Note that, in Fig. 5, the operating frequency change rate changes in opposite directions from the outside air temperature of 7 degrees C as a boundary. The reason for this is considered as follows. High pressure difference operation is performed with the outside air of -15 degrees C, and excessive load operation is performed with the outside air of 40 degrees C, the high pressure difference operation and the excessive load operation satisfying conditions under which a high pressure easily increases. Thus, the change rate of the operating frequency of the compressor is changed gradually so that the high pressure hardly increases.

For the opening degree of the pressure reducing device 4, the heat-pump water heating apparatus 13 similarly has a reference change rate set in advance. Specifically, the opening degree of the pressure reducing device 4 is changed by a predetermined opening degree set in advance for each control interval (for example, 30 seconds). Further, the controller 12 automatically changes, in order to prevent the protection function from being frequently activated, an opening degree change rate of the pressure reducing device 4 based on a condensing pressure. Specifically, regardless of outside air temperature, when a discharge refrigerant pressure detected by the discharge pressure sensor 10 is equal to or more than a preset pressure (in this case, for example, 3.5 MPa), which is set in advance, the opening degree change rate is changed to, for example, 80% of the reference. As a percentage of the reference to which the opening degree change rate is to be set, there is used an optimum value selected from simulation in advance, with which a degree of superheat can become the preset degree of superheat as soon as possible while the activation of the protection function is avoided.

Further, in the heat-pump water heating apparatus 13 of Embodiment 2, R410A refrigerant is used and a design pressure is set to 4.0 MPa. Further, refrigerant and water are caused to flow through the heat source-side heat exchanger 5 in opposite directions, and, while the condensing temperature of 61 degrees C (condensing pressure of 4.0 MPa or less) is maintained, a degree of superheat (in this case, 4 degrees C) of discharge refrigerant is used at a water-side outlet, to thereby discharge hot water at 65 degrees C without any increase in condensing temperature. Note that, the reason why the condensing pressure is set to 4.0 MPa or less is that, when the condensing pressure has the same value as that of the design pressure of the air conditioner, many refrigerant circuit components and pipes may also be used for the air conditioner and the cost is thus reduced.

Fig. 6 is a flow chart of compressor operating frequency control of the heat-pump water heating apparatus according to Embodiment 2 of the present invention. In Fig. 6, parts of processing that are the same as those of Fig. 3 are denoted by the same step numbers. The control of Fig. 6 is carried out for each control interval.

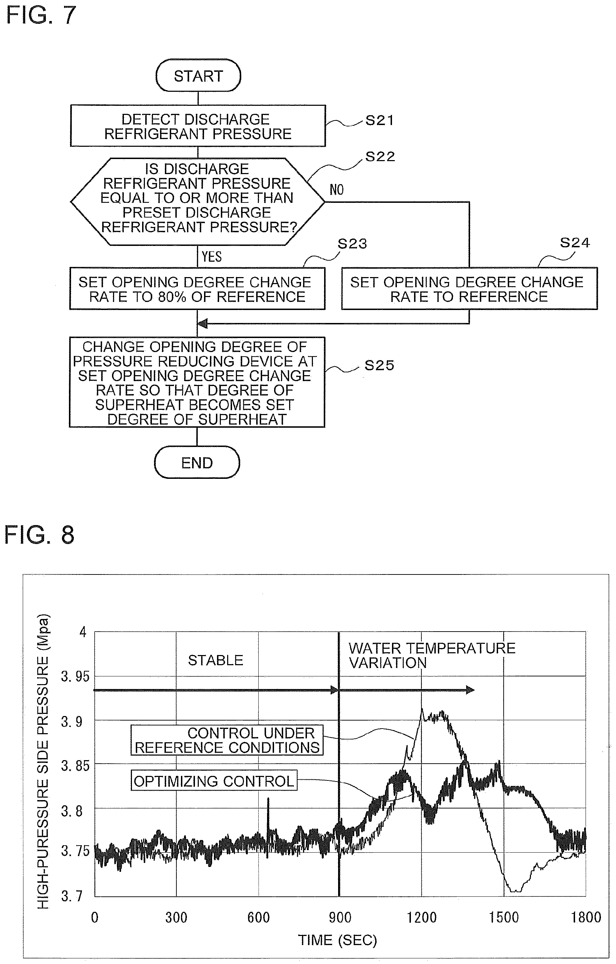

The controller 12 computes the hot water supply load as in Embodiment 1 (S1), and controls the operating frequency of each the large-capacity compressor 1 and the small-capacity compressor 2 in accordance with the calculated result (S2). Now, a case in which a target water supply temperature is changed, for example, from 65 degrees C to 67 degrees C is considered. In this case, the hot water supply load is increased, and the operating frequency is increased correspondingly. Thus, the controller 12 determines, before the processing of Step S2, the operating frequency change rate based on outside air temperature measured by the heat medium temperature detection sensor 9g and Fig. 7 (S11). Then, the controller 12 performs the operation of Step S2 with the determined operating frequency change rate.

Fig. 7 is a flow chart of control for the opening degree of the pressure reducing device 4 of the heat-pump water heating apparatus according to Embodiment 2 of the present invention. The control of Fig. 7 is carried out for each control interval. The control of Fig. 7 and the control of Fig. 6 are carried out by the controller 12 in parallel to each other.

The controller 12 detects a discharge refrigerant pressure by the discharge pressure sensor 10 (S21), and checks whether or not the detected discharge refrigerant pressure is a preset discharge refrigerant pressure or more (S22). When the detected discharge refrigerant pressure is the preset discharge refrigerant pressure or more, the controller 12 sets the opening degree change rate to 80% of the reference (S23), whereas when the detected discharge refrigerant pressure is less than the preset discharge refrigerant pressure, the controller 12 sets the opening degree change rate to the reference itself (S24). Then, the controller 12 changes the opening degree of the pressure reducing device 4 at the opening degree change rate set in Step S23 or Step S24 so that a degree of superheat may become the preset degree of superheat (S25).

Fig. 8 is a graph showing a change in high pressure (condensing pressure) observed when the target water supply temperature is changed in the heat-pump water heating apparatus according to Embodiment 2 of the present invention. Fig. 8 is a graph of the change in high pressure after the target water supply temperature is changed from 65 degrees C to 67 degrees C, for showing a case in which each of the compressor operating frequency and the pressure reducing device 4 is controlled under reference conditions, and a case in which each of the compressor operating frequency and the pressure reducing device 4 is subjected to the control of Embodiment 2 ("optimizing control" of Fig. 8).

As shown in Fig. 8, after the target water supply temperature is changed from 65 degrees C to 67 degrees C, when the control is performed under the reference conditions, the high pressure (condensing pressure) largely varies, but in the control of Embodiment 2, the variation in high pressure (condensing pressure) can be suppressed to be small.

As described above, according to Embodiment 2, effects similar to those of Embodiment 1 can be obtained. In addition, the compressor operating frequency change rate is changed based on heat medium temperature (outside air temperature), and the opening degree change rate of the pressure reducing device 4 is changed based on a discharge refrigerant pressure. With this, an increase in high pressure is suppressed, thereby being capable of stably discharging water having a high temperature of 65 degrees C, and suppressing the frequent activation of the protection function.

Moreover, the refrigerant and the water flowing into the heat source-side heat exchanger 5 are caused to flow in the opposite directions, and hence the hot water at 65 degrees C can be discharged with the use of the R410A refrigerant while the condensing pressure is maintained at 4.0 MPa or less.

By the way, it is described in the above description that high efficiency and high-temperature water discharge can be realized in the heat-pump water heating apparatus 13 using the R410A refrigerant. However, needless to say, the present invention can be used for the heat-pump water heating apparatus 13 using R32 or CO2 as the refrigerant.

Moreover, outside air (air) is exemplified as the heat medium that exchanges its heat with that of the refrigerant in the heat source-side heat exchanger 5. However, the heat medium is not limited to air, and may be water, brine, or the like. Further, the same effects can be obtained with the use of any heat medium.

### Reference Signs List

1 large-capacity compressor 2 small-capacity compressor 3 load-side heat exchanger 4 pressure reducing device 5 heat source-side heat exchanger 6 accumulator 7 refrigerant pipe 8 water pipe 9a discharge temperature sensor 9b suction temperature sensor 9c discharge temperature sensor 9d suction temperature sensor 9e inlet water temperature detection sensor 9f outlet water temperature detection sensor 9g heat medium temperature detection sensor 10 discharge pressure sensor 11 suction pressure sensor 12 controller 13 heat-pump water heating apparatus

## Claims

1. A heat-pump water heating apparatus (13), comprising:
a refrigerant circuit through which refrigerant is circulated, the refrigerant circuit including
a plurality of compressors (1,2) arranged in parallel to each other and having capacities different from each other;
a load-side heat exchanger (3);
a pressure reducing device (4); and
a heat source-side heat exchanger (5),
the plurality of compressors (1,2), the load-side heat exchanger (3), the pressure reducing device (4), and the heat source-side heat exchanger (5) being connected by a refrigerant pipe (7);
a hot water supply circuit configured to exchange heat between the refrigerant flowing through the refrigerant circuit and a load-side heat medium by the load-side heat exchanger (3), to thereby heat the load-side heat medium;
a degree-of-superheat detection unit configured to detect a degree of superheat of the refrigerant at an outlet of the heat source-side heat exchanger; and
a controller (12) configured to control an operating frequency of each of the plurality of compressors (1,2) in accordance with a hot water supply load of the hot water supply circuit,
the controller (12) being configured to,
when the hot water supply load is equal to or more than a first preset load set in advance, cause the plurality of compressors (1,2) to operate simultaneously to thereby control the operating frequency of each of the plurality of compressors (1,2) in accordance with the hot water supply load, and
when the hot water supply load is less than the first preset load, cause a compressor, having a minimum capacity of the plurality of compressors (1,2), alone to operate to thereby control the operating frequency of the compressor in accordance with the hot water supply load, **characterized in that**
the controller (12) is configured to
control, in causing the compressor having a minimum capacity to operate alone or causing the compressors (1,2) to operate simultaneously, an opening degree of the pressure reducing device (4) so that the degree of superheat detected by the degree-of-superheat detection unit becomes a preset degree of superheat set in advance, and
change the opening degree of the pressure reducing device (4) in accordance with a change in the hot water supply load by
changing the opening degree of the pressure reducing device (4) at a reference change rate set in advance when a pressure of refrigerant discharged from the plurality of compressors (1,2) is less than a preset pressure set in advance; and
changing the opening degree of the pressure reducing device (4) at a changing rate smaller than the reference change rate when the pressure of the refrigerant discharged from the plurality of compressors (1,2) is equal to more than the preset pressure set in advance.

2. The heat-pump water heating apparatus (13) of claim 1, wherein the controller (12) is configured to, in causing the plurality of compressors (1,2) to operate simultaneously, determine the operating frequency of each of the plurality of compressors (1,2) so that the smaller the operating frequency is, the smaller the hot water supply load is, and when the hot water supply load is equal to or more than the first preset load and less than a second preset load set in advance, refrigerant circulating amounts of the plurality of compressors (1,2) are equal to each other.

3. The heat-pump water heating apparatus (13) of claim 2, wherein the controller (12) is configured to change, when the controller (12) changes the operating frequency in accordance with a change in the hot water supply load, a change rate of the operating frequency based on a temperature of a heat medium that exchanges heat with the refrigerant by the heat source-side heat exchanger (5).

4. The heat-pump water heating apparatus (13) of any one of claims 1 to 3, wherein the plurality of compressors (1,2) include two compressors (1,2) of a large-capacity compressor and a small-capacity compressor, and
a capacity ratio between the large-capacity compressor and the small-capacity compressor is 3:2.

5. The heat-pump water heating apparatus (13) of claim 4, wherein
an operating frequency range of each of the large-capacity compressor and the small-capacity compressor is from 30 Hz to 100 Hz, and
an operating frequency of each of the large-capacity compressor and the small-capacity compressor is 60 Hz when compressor efficiency is maximum.

6. The heat-pump water heating apparatus (13) of any one of claims 1 to 5, wherein a flow direction of the refrigerant flowing through the load-side heat exchanger (3) and a flow direction of the load-side heat medium flowing through the load-side heat exchanger (3) are opposed to each other.

7. The heat-pump water heating apparatus (13) of any one of claims 1 to 6, wherein the refrigerant comprises R410A refrigerant, and the controller (12) is configured to control the operating frequency of each of the plurality of compressors (1,2) and an opening degree of the pressure reducing device (4) so that, while maintaining a condensing pressure of 4.0 MPa or less, an outlet temperature of the load-side heat medium in the load-side heat exchanger (3) is 65 degrees C.

## Patentansprüche

1. Wärmepumpen-Wasseraufheizvorrichtung (13), die Folgendes umfasst:
einen Kühlmittelkreislauf, durch den Kühlmittel zirkuliert wird, wobei der Kühlmittelkreislauf Folgendes umfasst:
eine Vielzahl von Kompressoren (1, 2), die parallel zueinander angeordnet sind und Kapazitäten aufweisen, die sich voneinander unterscheiden;
einen lastseitigen Wärmetauscher (3);
eine Druckreduktionsvorrichtung (4); und
einen wärmequellenseitigen Wärmetauscher (5),
wobei die Vielzahl von Kompressoren (1, 2), der lastseitige Wärmetauscher (3), die Druckreduktionsvorrichtung (4) und der wärmequellenseitige Wärmetauscher (5) über ein Kühlmittelrohr (7) verbunden sind;
einen Warmwasserversorgungskreislauf, der konfiguriert ist, Wärme zwischen dem Kühlmittel, das durch den Kühlmittelkreislauf strömt, und einem lastseitigen Wärmemedium über den lastseitigen Wärmetauscher (3) auszutauschen, um dadurch das lastseitige Wärmemedium aufzuheizen;
eine Überhitzungsgrad-Detektionseinheit, die konfiguriert ist, einen Überhitzungsgrad des Kühlmittels an einem Auslass des wärmequellenseitigen Wärmetauschers zu detektieren; und
eine Steuereinheit (12), die konfiguriert ist, eine Betriebsfrequenz jedes aus der Vielzahl von Kompressoren (1, 2) gemäß einer Warmwasserversorgungslast des Warmwasserversorgungskreislaufs zu steuern,
wobei die Steuereinheit (12) konfiguriert ist,
auszulösen, dass die Vielzahl von Kompressoren (1, 2) gleichzeitig arbeitet, wenn die Warmwasserversorgungslast größer oder gleich einer ersten voreingestellten Last ist, um dadurch die Betriebsfrequenz jedes aus der Vielzahl von Kompressoren (1, 2) gemäß der Warmwasserversorgungslast zu steuern, und
auszulösen, dass ein Kompressor, der eine Mindestkapazität aus der Vielzahl von Kompressoren (1, 2) aufweist, allein betrieben wird, wenn die Warmwasserversorgungslast kleiner ist als die erste voreingestellte Last, um dadurch die Betriebsfrequenz des Kompressors gemäß der Warmwasserversorgungslast zu steuern, **dadurch gekennzeichnet, dass**
die Steuereinheit (12) konfiguriert ist,
durch Auslösen des alleinigen Betriebs des Kompressors mit einer Mindestkapazität oder durch Auslösen des gleichzeitigen Betriebs der Kompressoren (1, 2) einen Öffnungsgrad der Druckreduktionsvorrichtung (4) zu steuern, so dass der von der Überhitzungsgrad-Detektionseinheit detektierte Überhitzungsgrad zu einem voreingestellten Überhitzungsgrad wird, und
Verändern des Öffnungsgrads der Druckreduktionsvorrichtung (4) gemäß einer Veränderung der Warmwasserversorgungslast durch
Verändern des Öffnungsgrads der Druckreduktionsvorrichtung (4) mit einer voreingestellten Referenzänderungsrate, wenn ein Druck des Kühlmittels, das aus der Vielzahl von Kompressoren (1, 2) herausströmt, kleiner ist als ein voreingestellter Druck; und
Verändern des Öffnungsgrads der Druckreduktionsvorrichtung (4) mit einer Änderungsrate, die kleiner ist als die Referenzänderungsrate, wenn der Druck des Kühlmittels, das aus der Vielzahl von Kompressoren (1, 2) herausströmt, größer oder gleich des voreingestellten Durcks ist.

2. Wärmepumpen-Wasseraufheizvorrichtung (13) nach Anspruch 1, wobei die Steuereinheit (12) konfiguriert ist, durch Auslösen des gleichzeitigen Betriebs der Vielzahl von Kompressoren (1, 2), die Betriebsfrequenz jedes aus der Vielzahl von Kompressoren (1, 2) zu bestimmen, so dass, je kleiner die Betriebsfrequenz, desto kleiner die Warmwasserversorgungslast, und wenn die Warmwasserversorgungslast größer oder gleich der ersten voreingestellten Last und kleiner als eine zweite voreingestellte Last ist, zirkulierende Kühlmittelmengen der Vielzahl von Kompressoren (1, 2) gleich groß sind.

3. Wärmepumpen-Wasseraufheizvorrichtung (13) nach Anspruch 2, wobei die Steuereinheit (12) konfiguriert ist, eine Änderungsrate der Betriebsfrequenz basierend auf einer Temperatur eines Wärmemediums, das Wärme über den wärmequellenseitigen Wärmetauscher (5) mit dem Kühlmittel austauscht, zu verändern, wenn die Steuereinheit (12) die Betriebsfrequenz gemäß einer Veränderung einer Warmwasserversorgungslast verändert.

4. Wärmepumpen-Wasseraufheizvorrichtung (13) nach einem der Ansprüche 1 bis 3, wobei die Vielzahl von Kompressoren (1, 2) zwei Kompressoren (1, 2) bestehend aus einem Kompressor mit hoher Kapazität und einem Kompressor mit geringer Kapazität umfasst, und
ein Kapazitätsverhältnis zwischen dem Kompressor mit hoher Kapazität und dem Kompressor mit geringer Kapazität 3:2 ist.

5. Wärmepumpen-Wasseraufheizvorrichtung (13) nach Anspruch 4, wobei
ein Betriebsfrequenzbereich jedes aus dem Kompressor mit hoher Kapazität und dem Kompressor mit geringer Kapazität von 30 Hz bis 100 Hz beträgt, und
eine Betriebsfrequenz von jedem aus dem Kompressor mit hoher Kapazität und dem Kompressor mit geringer Kapazität 60 Hz beträgt, wenn die Kompressoreffizienz ihr Maximum erreicht.

6. Wärmepumpen-Wasseraufheizvorrichtung (13) nach einem der Ansprüche 1 bis 5, wobei eine Strömungsrichtung des durch den lastseitigen Wärmetauscher (3) strömenden Kühlmittels und eine Strömungsrichtung des durch den lastseitigen Wärmetauscher (3) strömenden lastseitigen Wärmemediums einander entgegengesetzt sind.

7. Wärmepumpen-Wasseraufheizvorrichtung (13) nach einem der Ansprüche 1 bis 6, wobei das Kühlmittel R410A-Kühlmittel umfasst, und die Steuereinheit (12) konfiguriert ist, die Betriebsfrequenz jedes aus der Vielzahl von Kompressoren (1, 2) und einen Öffnungsgrad der Druckreduktionsvorrichtung (4) so zu steuern, dass, während ein Kondensationsdruck von 4,0 MPa oder weniger aufrechterhalten wird, eine Auslasstemperatur des lastseitigen Wärmemediums in dem lastseitigen Wärmetauscher (3) 65 °C beträgt.

## Revendications

1. Appareil de chauffage d'eau à pompe à chaleur (13), comprenant :
un circuit de réfrigérant à travers lequel circule un réfrigérant, le circuit de réfrigérant comprenant
une pluralité de compresseurs (1,2) disposés parallèlement les uns aux autres et ayant des capacités différentes les uns des autres ;
un échangeur de chaleur côté charge (3) ;
un dispositif de réduction de pression (4) ; et
un échangeur de chaleur côté source de chaleur (5),
la pluralité de compresseurs (1, 2), l'échangeur de chaleur côté charge (3), le dispositif de réduction de pression (4) et l'échangeur de chaleur côté source de chaleur (5) étant reliés par un tuyau de réfrigérant (7) ;
un circuit d'alimentation en eau chaude configuré pour échanger de la chaleur entre le réfrigérant circulant à travers le circuit de réfrigérant et un milieu de chaleur côté charge par l'échangeur de chaleur côté charge (3), afin de chauffer le milieu de chaleur côté charge ;
une unité de détection de degré de surchauffe configurée pour détecter un degré de surchauffe du réfrigérant sur une sortie de l'échangeur de chaleur côté source de chaleur ; et
un dispositif de commande (12) configuré pour commander une fréquence de fonctionnement de chacun de la pluralité de compresseurs (1, 2) en fonction d'une charge d'alimentation en eau chaude du circuit d'alimentation en eau chaude,
le dispositif de commande (12) étant configuré pour,
lorsque la charge d'alimentation en eau chaude est égale ou supérieure à une première charge préétablie établie à l'avance, amener la pluralité de compresseurs (1, 2) à fonctionner simultanément pour commander ainsi la fréquence de fonctionnement de chacun de la pluralité de compresseurs (1, 2) en fonction de la charge d'alimentation en eau chaude, et
lorsque la charge d'alimentation en eau chaude est inférieure à la première charge préétablie, amener un compresseur, ayant une capacité minimale de la pluralité de compresseurs (1, 2), à fonctionner seul pour commander ainsi la fréquence de fonctionnement du compresseur en fonction de la charge d'alimentation en eau chaude, **caractérisé en ce que**
le dispositif de commande (12) est configuré pour
commander, en amenant le compresseur ayant une capacité minimale à fonctionner seul ou en amenant les compresseurs (1, 2) à fonctionner simultanément, un degré d'ouverture du dispositif de réduction de pression (4) de sorte que le degré de surchauffe détecté par l'unité de détection de degré de surchauffe devient un degré préétabli de surchauffe établi à l'avance, et
changer le degré d'ouverture du dispositif de réduction de pression (4) en fonction d'un changement de la charge d'alimentation en eau chaude en
changeant le degré d'ouverture du dispositif de réduction de pression (4) à un taux de changement de référence établi à l'avance lorsqu'une pression de réfrigérant déchargé depuis la pluralité de compresseurs (1, 2) est inférieure à une pression préétablie établie à l'avance ; et
changeant le degré d'ouverture du dispositif de réduction de pression (4) à un taux de changement inférieur au taux de changement de référence lorsque la pression du réfrigérant déchargé depuis la pluralité de compresseurs (1, 2) est égale ou supérieure à la pression préétablie établie à l'avance.

2. Appareil de chauffage d'eau à pompe à chaleur (13) selon la revendication 1, dans lequel le dispositif de commande (12) est configuré pour, en amenant la pluralité de compresseurs (1, 2) à fonctionner simultanément, déterminer la fréquence de fonctionnement de chacun de la pluralité de compresseurs (1, 2) de sorte que plus la fréquence de fonctionnement est faible, plus la charge d'alimentation en eau chaude est faible, et lorsque la charge d'alimentation en eau chaude est égale ou supérieure à la première charge préétablie et inférieure à une seconde charge préétablie établie à l'avance, des quantités en circulation de réfrigérant de la pluralité de compresseurs (1, 2) sont égales les unes aux autres.

3. Appareil de chauffage d'eau à pompe à chaleur (13) selon la revendication 2, dans lequel le dispositif de commande (12) est configuré pour changer, lorsque le dispositif de commande (12) change la fréquence de fonctionnement en fonction d'un changement de la charge d'alimentation en eau chaude, un taux de changement de la fréquence de fonctionnement sur la base d'une température d'un milieu de chaleur qui échange de la chaleur avec le réfrigérant par l'échangeur de chaleur côté source de chaleur (5).

4. Appareil de chauffage d'eau à pompe à chaleur (13) selon l'une quelconque des revendications 1 à 3, dans lequel la pluralité de compresseurs (1, 2) comprend deux compresseurs (1, 2), un compresseur de grande capacité et un compresseur de petite capacité, et
un rapport de capacité entre le compresseur de grande capacité et le compresseur de petite capacité est de 3:2.

5. Appareil de chauffage d'eau à pompe à chaleur (13) selon la revendication 4, dans lequel
une plage de fréquence de fonctionnement de chacun des compresseur de grande capacité et compresseur de petite capacité est de 30 Hz à 100 Hz, et
une fréquence de fonctionnement de chacun des compresseur de grande capacité et compresseur de petite capacité est de 60 Hz lorsque l'efficacité de compresseur est maximale.

6. Appareil de chauffage d'eau à pompe à chaleur (13) selon l'une quelconque des revendications 1 à 5, dans lequel une direction d'écoulement du réfrigérant circulant à travers l'échangeur de chaleur côté charge (3) et une direction d'écoulement du milieu de chaleur côté charge circulant à travers l'échangeur de chaleur côté charge (3) sont opposées l'une à l'autre.

7. Appareil de chauffage d'eau à pompe à chaleur (13) selon l'une quelconque des revendications 1 à 6, dans lequel le réfrigérant comprend un réfrigérant R410A, et le dispositif de commande (12) est configuré pour commander la fréquence de fonctionnement de chacun de la pluralité de compresseurs (1, 2) et un degré d'ouverture du dispositif de réduction de pression (4) de sorte que, tout en maintenant une pression de condensation de 4,0 MPa ou moins, une température de sortie du milieu de chaleur côté charge dans l'échangeur de chaleur côté charge (3) est de 65 degrés C.
